# EUROPEAN PATENT SPECIFICATION

(11) **EP 3 091 248 B1**
(45) Date of publication and mention of the grant of the patent: **03.07.2019**
(21) Application number: 15166720.1
(22) Date of filing: 07.05.2015
(51) Int. Cl.: F16F 9/00

(54) **HYDRAULIC SHOCK ABSORBER**
HYDRAULISCHER STOSSDÄMPFER
AMORTISSEUR HYDRAULIQUE

(43) Date of publication of application: 09.11.2016
(73) Proprietor: Safran Landing Systems UK Ltd, Gloucester, Gloucestershire GL2 9QH (GB)
(72) Inventor: SCHMIDT, Robert K, Gloucester, Gloucestershire GL2 9QH (GB)
(74) Representative: Latham, Stuart Alexander

(56) References cited:
- EP-A2- 0 945 641
- DE-A1- 2 952 531
- US-A1- 2003 191 216
- US-A1- 2011 133 617

## Description

### Background to the Invention

It is common for a hydraulic shock absorber to include an inner housing portion which is slidably coupled to an outer housing portion such that the effective length of the shock absorber is variable. The inner and outer housing portions together define an internal cavity or chamber, which contains shock absorber fluid such as oil. The inner housing portion is known in the art as a 'slider' or 'sliding tube', and the outer housing portion is known as a 'main fitting'.

The region where the inner and outer housing portions overlap defines an annulus between adjacent surfaces of the inner and outer housing portions, which varies in size in accordance with the extension state of the shock absorber.

One or more dynamic seals are generally provided within the annulus to confine the shock absorber fluid to the chamber. The dynamic seals can be mounted on an inner face of an annular ring, which is inserted into and fixed in place within the annulus such that the dynamic seals press against the inner housing portion as the shock absorber extends and retracts, inhibiting the passage of shock absorber fluid from the chamber to the outside environment. One or more static seals can be provided on an outer face of the annular ring to bear against the outer housing portion when the annular ring is fitted within the annulus.

The effectiveness of a dynamic seal in terms of inhibiting the passage of shock absorber fluid is dependent on the force with which it is biased against the inner shock absorber portion. However, a strong biasing force results in a high level of wear. Therefore, there exists a trade-off between, on the one hand, the effectiveness of the fluid barrier and, on the other hand, the lifespan of the dynamic seal. Also, despite improvements in seal technology and materials, seals can be subject to minor damage on installation and from debris in service. Consequently, it is common for shock absorber fluid to leak via dynamic seals, particularly when a shock absorber remains in a static condition for a prolonged period of time.

EP 0 945 641 A2 discloses a hydraulic shock absorber comprising an inner portion slidably coupled to an outer housing portion to define a variable size chamber for contacting shock absorber fluid, wherein the shock absorber fluid comprises a colloidal suspension of inorganic particles in liquid.

### Summary of Invention

According to a first aspect of the invention there is provided a hydraulic shock absorber comprising:
an inner housing portion slidably coupled to an outer housing portion to define a variable size chamber for containing shock absorber fluid; and
a dynamic seal having a sealing face adjacent to the inner housing portion for confining shock absorber fluid to the chamber, wherein the dynamic seal is mounted within an annulus between adjacent surfaces of the inner and outer housing portions which varies in size in accordance with the extension state of the shock absorber, characterised in that:
   the shock absorber fluid comprises a colloidal suspension of inorganic particles in liquid, the colloidal suspension comprising 1 - 25 % by weight inorganic particles.

Thus, the shock absorber according to the first aspect of the invention contains a shock absorber fluid additionally comprising an additive of inorganic particles which form a colloidal suspension. The inorganic particles impart non-Newtonian characteristics to the shock absorbing fluid which cause it to be more viscous when at rest than when under shear stress. The inventor has found that by incorporating 1 - 25% of the inorganic particles by weight based of the total weight of the colloidal suspension, a sufficient level of non-Newtonian (usually thixotropic) behaviour is demonstrated which allows the shock absorber fluid to substantially resist leakage past the dynamic seal, while not significantly affecting the dynamic properties of the shock absorber. The viscosity of the shock absorber fluid can also improve corrosion resistance.

The liquid can be oil.

The inorganic particles can comprise a mineral.

The inorganic particles can be silicates or aluminosilicates.

The inorganic particles can be fumed silica.

The inorganic particles can be crystalline hydrated magnesium aluminosilicate.

The colloidal suspension can comprise 1 - 15 % by weight inorganic particles.

The colloidal suspension can comprise 5 - 10 % by weight inorganic particles.

The inorganic particles can have an average particle size of 1 to 1000 nanometers.

The dynamic seal is provided within the annulus; for example, it can be coupled to an inner surface of the outer housing portion or mounted on a seal ring assembly in a conventional manner.

The shock absorber can be a main landing gear shock absorbing strut.

According to a second aspect of the invention there is provided an aircraft landing gear assembly including a shock absorber according to the first aspect.

According to a third aspect of the invention there is provided an aircraft assembly including one or more shock absorbers according to the first aspect or one or more aircraft landing gear assemblies according to the second aspect.

According to a fourth aspect of the invention, there is provided a method of preventing leaking of shock absorber fluid from a shock absorber, comprising the steps of:
providing a shock absorber comprising an inner housing portion slidably coupled to an outer housing portion to define a variable size chamber for containing shock absorber fluid, and a dynamic seal having a sealing face adjacent to the inner housing portion for confining shock absorber fluid to the chamber; and
providing shock absorber fluid within the chamber, whereby the shock absorber fluid comprises a colloidal suspension of inorganic particles in liquid, the colloidal suspension comprising 1 - 25 % by weight inorganic particles.

### Brief Description of the Drawings

Embodiments of the invention will now be described, strictly by way of example only, with reference to the accompanying drawings, of which:

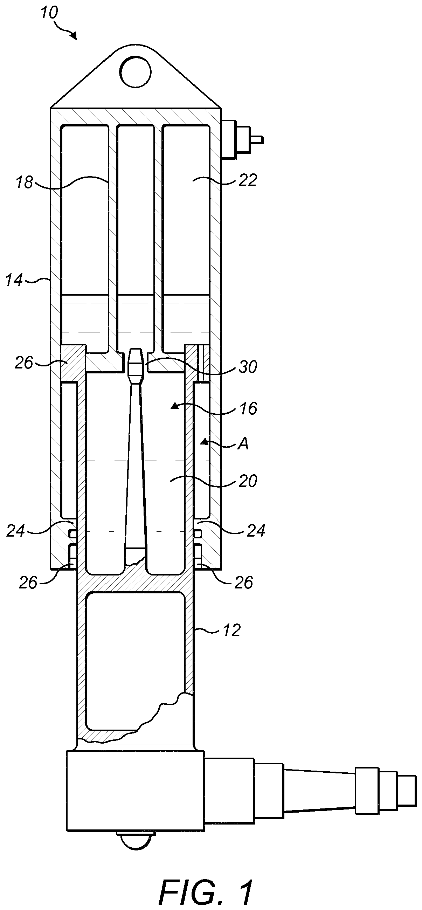

Figure 1 is a schematic representation of an oleo-pneumatic shock absorber according to an embodiment of the invention.

### Description of the Embodiments

Referring to Figure 1, an aircraft assembly comprising an oleo-pneumatic shock absorber is shown generally at 10. In this embodiment the aircraft assembly is an aircraft landing gear assembly. The shock absorber 10 forms the main strut of the aircraft landing gear.

The shock absorber 10 comprises an inner housing portion 12 slidably coupled in an outer housing portion 14 via bearings 26. The housing portions 12, 14 together define an internal cavity or chamber 16 which contains shock absorber fluid.

In the illustrated embodiment the chamber 16 contains a colloidal suspension 20 in a lower portion and gas 22 in an upper portion. The colloidal suspension 20 and gas 22 together make up the shock absorber fluid. The colloidal suspension 20 and gas 22 can in some embodiments be separated by a floating piston in a conventional manner. In other embodiments the shock absorber fluid can consist of single type of fluid, such as a colloidal suspension alone.

The region where the housing portions 12, 14 overlap defines an annulus A between adjacent surfaces of the housing portions 12, 14. The annulus A varies in size in accordance with the extension state of the shock absorber 10.

A conventional dynamic seal 24 such as is described in the background section above is mounted within the annulus A for confining shock absorber fluid to the chamber 16. The dynamic seal 24 enables the inner housing portion 12 to slide within the outer housing portion 14 with limited leakage of the shock absorber fluid from the chamber 16. Thus, the chamber 16 defines a substantially sealed fluid volume for containing the shock absorber fluid.

When load is applied to the shock absorber 10, such as during aircraft weight on wheels upon landing, the inner housing portion 12 slides into the outer housing portion 14 and the shock absorber 10 is compressed, reducing the volume of the chamber 16. This causes compression of the gas 22 inside the internal chamber 16.

When load is removed from the shock absorber 10, such as following take off, the internal pressure of the shock absorber fluid causes the inner housing portion 12 to slide out of the outer housing portion 14 so that the shock absorber 10 expands to assume a default length.

During compression and extension of the shock absorber, colloidal suspension 20 is forced through an orifice 30 to provide viscous damping. The viscosity of the colloidal suspension therefore affects the level of viscous damping.

The shock absorber fluid comprises a colloidal suspension of inorganic particles in liquid. The colloidal suspension comprises 1 - 25 % by weight inorganic particles, with the remainder being the liquid phase. As noted above, the addition of inorganic particles to the liquid, for example oil, that is usually used alone, imparts non-Newtonian properties to the fluid. In particular, the colloidal suspension displays shear-thinning properties, and is usually thixotropic, so that when the fluid is at rest, the viscosity is higher that when the fluid is subject to shear stress. Since leakage is most pronounced when shock absorbers are not moving, this provides a significant benefit in substantially reducing the leakage. This is particularly advantageous for aircraft landing gear which are not moving for the majority of the time, when the landing gear is retracted during flight, and when the aircraft is parked on the ground.

By inorganic, we mean that the particles added to the shock absorber fluid are not carbon based compounds and are derived from biological systems. The inorganic particles are usually non-metallic. The inorganic particles are preferably minerals such as silicates or aluminosilicates. An example of an aluminosilicate which is particularly suited to use in the present invention is a magnesium aluminosilicate such as attapulgite. A crystalline hydrated magnesium aluminosilicate suitable for use in the present invention is commercially available as Attagel RTM from BASF. In another embodiment the inorganic particles are silica, particularly fumed silica, also known as pyrogenic silica. This is commercially available as Aerosil RTM from Evonik.

The inorganic particles have a particle size suitable for forming a colloidal suspension, usually in the range of 1 to 10000 nanometers, usually 1 to 1000 nanometers, or 1 to 900 nanometers, or 1 to 500 nanometers. By particle size we mean average particle diameter.

The liquid phase of the colliodal suspension can be any suitable liquid, such as mineral oil which is typically used for this purpose. It could also be a silicone fluid such as polydimethylsiloxane or polyphenylmethylsiloxane, or an alcohol such as a glycol.

A colloidal suspension is formed by mixing the particles with the liquid in a conventional manner.

The inorganic particles make up 1 - 25 % by weight of the total colloidal suspension. It has been found that in this range the normal fluid dynamics of the shock absorber are not significantly affected, leaving the shock absorber to function normally when it is in motion, but the leakage when the shock absorber in stationary is significantly reduced. In one embodiment, the inorganic particles make up 1 - 15% by weight of the total colloidal suspension. In another embodiment, the inorganic particles make up 5 - 10% by weight of the total colloidal suspension.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. A hydraulic shock absorber (10) comprising:
an inner housing portion (12) slidably coupled to an outer housing portion (14) to define a variable size chamber for containing shock absorber fluid; and
a dynamic seal (24) having a sealing face adjacent to the inner housing portion for confining shock absorber fluid to the chamber, wherein the dynamic seal is mounted within an annulus between adjacent surfaces of the inner and outer housing portions which varies in size in accordance with the extension state of the shock absorber,
wherein the shock absorber fluid comprises a colloidal suspension of inorganic particles in liquid, the colloidal suspension comprising 1 - 25 % by weight inorganic particles.

2. A hydraulic shock absorber according to claim 1, wherein the inorganic particles comprise a mineral.

3. A hydraulic shock absorber according to claim 1 or 2, wherein the inorganic particles are silicates or aluminosilicates.

4. A hydraulic shock absorber according to claim 1 or 2, wherein the inorganic particles are fumed silica.

5. A hydraulic shock absorber according to any preceding claim, wherein the inorganic particles are crystalline hydrated magnesium aluminosilicate.

6. A hydraulic shock absorber according to any preceding claim, wherein the colloidal suspension comprises 1 - 15 % by weight inorganic particles.

7. A hydraulic shock absorber according to any preceding claim, wherein the colloidal suspension comprises 5 - 10 % by weight inorganic particles.

8. A hydraulic shock absorber according to any preceding claim, wherein the inorganic particles have an average particle size of 1 to 1000 nanometers.

9. An aircraft landing gear assembly including a hydraulic shock absorber according to any preceding claim.

10. An aircraft assembly including one or more shock absorbers according to any of claims 1 to 9 or one or more aircraft landing gear assemblies according to claim 9.

11. A method of preventing leaking of shock absorber fluid from a shock absorber, comprising the steps of:
providing a shock absorber comprising an inner housing portion (12) slidably coupled to an outer housing portion (14) to define a variable size chamber for containing shock absorber fluid, and a dynamic seal (24) having a sealing face adjacent to the inner housing portion for confining shock absorber fluid to the chamber; and
providing shock absorber fluid within the chamber, whereby the shock absorber fluid comprises a colloidal suspension of inorganic particles in liquid, the colloidal suspension comprising 1 - 25 % by weight inorganic particles.

## Patentansprüche

1. Hydraulischer Stoßdämpfer (10), umfassend:
einen inneren Gehäuseabschnitt (12), der verschiebbar mit einem äußeren Gehäuseabschnitt (14) gekoppelt ist, um eine Kammer mit variabler Größe zur Aufnahme von Stoßdämpferfluid zu definieren; und
eine dynamische Dichtung (24) mit einer Dichtfläche, die an den inneren Gehäuseabschnitt angrenzt, um das Stoßdämpferfluid auf die Kammer zu begrenzen, wobei die dynamische Dichtung innerhalb einer Ringspalte zwischen benachbarten Oberflächen des inneren und des äußeren Gehäuseteils montiert ist, die in ihrer Größe entsprechend dem Ausfahrzustand des Stoßdämpfers variiert, wobei das Stoßdämpferfluid eine kolloidale Suspension von anorganischen Partikeln in Flüssigkeit umfasst, die kolloidale Suspension umfasst 1 - 25 Gew.-% anorganische Partikel.

2. Hydraulischer Stoßdämpfer nach Anspruch 1, wobei die anorganischen Partikel ein Mineral umfassen.

3. Hydraulischer Stoßdämpfer nach Anspruch 1 oder 2, wobei die anorganischen Partikel Silikate oder Aluminosilikate sind.

4. Hydraulischer Stoßdämpfer nach Anspruch 1 oder 2, wobei die anorganischen Partikel pyrogene Kieselsäure sind.

5. Hydraulischer Stoßdämpfer nach einem der vorhergehenden Ansprüche, wobei die anorganischen Partikel kristallines, hydratisiertes Magnesium-Aluminosilikate sind.

6. Hydraulischer Stoßdämpfer nach einem der vorhergehenden Ansprüche, wobei die kolloidale Suspension 1 - 15 Gew.-% anorganische Partikel umfasst.

7. Hydraulischer Stoßdämpfer nach einem der vorhergehenden Ansprüche, wobei die kolloidale Suspension 5 - 10 Gew.-% anorganische Partikel umfasst.

8. Hydraulischer Stoßdämpfer nach einem der vorhergehenden Ansprüche, wobei die anorganischen Partikel eine durchschnittliche Partikelgröße von 1 bis 1000 Nanometern haben.

9. Flugzeugfahrwerkanordnung mit einem hydraulischen Stoßdämpfer nach einem der vorhergehenden Ansprüche.

10. Flugzeuganordnung mit einem oder mehreren Stoßdämpfern nach einem der Ansprüche 1 bis 9 oder eine oder mehrere Flugzeugfahrwerkanordnungen nach Anspruch 9.

11. Verfahren zum Verhindern des Auslaufens von Stoßdämpferfluid aus einem Stoßdämpfer, umfassend die Schritte:
Bereitstellen eines Stoßdämpfers umfassend einen inneren Gehäuseabschnitt (12), der verschiebbar mit einem äußeren Gehäuseabschnitt (14) gekoppelt ist, um eine Kammer mit variabler Größe zur Aufnahme von Stoßdämpferfluid zu definieren; und eine dynamische Dichtung (24) mit einer Dichtfläche, die an den inneren Gehäuseabschnitt angrenzt, um das Stoßdämpferfluid auf die Kammer zu begrenzen; und
Bereitstellen von Stoßdämpferfluid in der Kammer, wobei das Stoßdämpferfluid eine kolloidale Suspension von anorganischen Partikeln in Flüssigkeit umfasst, die kolloidale Suspension umfasst 1 - 25 Gew.-% anorganische Partikel.

## Revendications

1. Amortisseur hydraulique (10) comprenant :
une partie de logement intérieure (12) couplée de manière coulissante à une partie de logement extérieure (14) pour définir une chambre de taille variable destinée à contenir le liquide de l'amortisseur ; et
un joint dynamique (24) ayant une face d'étanchéité adjacente à la partie de logement intérieure pour isoler le liquide de l'amortisseur dans la chambre, dans lequel le joint dynamique, monté à l'intérieur d'un espace annulaire entre des surfaces adjacentes des parties de logement intérieure et extérieure, varie en taille selon l'état d'extension de l'amortisseur.
dans lequel
le liquide d'amortisseur comprend une suspension colloïdale de particules inorganiques dans le liquide, la suspension colloïdale comprenant 1 à 25 % en poids de particules inorganiques.

2. Amortisseur hydraulique selon la revendication 1, dans lequel les particules inorganiques comprennent un minéral.

3. Amortisseur hydraulique selon la revendication 1 ou 2, dans lequel les particules inorganiques sont des silicates ou des aluminosilicates.

4. Amortisseur hydraulique selon la revendication 1 ou 2, dans lequel les particules inorganiques sont de la silice pyrogénée.

5. Amortisseur hydraulique selon l'une quelconque des revendications précédentes, dans lequel les particules inorganiques sont de l'aluminosilicate de magnésium hydraté cristallin.

6. Amortisseur hydraulique selon l'une quelconque des revendications précédentes, dans lequel la suspension colloïdale comprend 1 à 15 % en poids de particules inorganiques.

7. Amortisseur hydraulique selon l'une quelconque des revendications précédentes, dans lequel la suspension colloïdale comprend 5 à 10 % en poids de particules inorganiques.

8. Amortisseur hydraulique selon l'une quelconque des revendications précédentes, dans lequel les particules inorganiques ont une dimension moyenne de particules de 1 à 1000 nanomètres.

9. Ensemble de train d'atterrissage d'aéronef incluant un amortisseur hydraulique selon l'une quelconque des revendications précédentes.

10. Ensemble d'aéronef incluant un ou plusieurs amortisseur(s) selon l'une quelconque des revendications 1 à 9, ou un ou plusieurs ensembles de train d'atterrissage d'aéronef selon la revendication 9.

11. Procédé de prévention des fuites de liquide dans un amortisseur, comprenant les étapes :
de fourniture d'un amortisseur comprenant une partie de logement intérieure (12) couplée de manière coulissante à une partie de logement extérieure (14) pour définir une chambre de taille variable destinée à contenir le liquide de l'amortisseur, et un joint dynamique (24) ayant une face d'étanchéité adjacente à la partie de logement intérieure pour isoler le liquide de l'amortisseur dans la chambre ; et
d'alimentation d'un liquide d'amortisseur à l'intérieur de la chambre, de sorte que le liquide d'amortisseur comprenne une suspension colloïdale de particules inorganiques dans le liquide, la suspension colloïdale comprenant 1 à 25 % en poids de particules inorganiques.
